# EUROPEAN PATENT APPLICATION

(11) **EP 4 814 298 A1**
(43) Date of publication of application: **30.09.2026**
(21) Application number: 25178943.4
(22) Date of filing: 27.05.2025
(51) Int. Cl.: F03D 7/02, F03D 80/50

(54) **A ROTOR-LOCK SYSTEM AND METHOD FOR A WIND TURBINE GENERATOR**

(30) Priority: 28.03.2025 IN 202511030090
(71) Applicant: RE Technologies GmbH, 22083 Hamburg (DE)
(72) Inventor: SHANKAR, Reddy M., 560066 Bengaluru Karnataka (IN)
(74) Representative: Buzzi, Notaro & Antonielli d'Oulx S.p.A.

(57) **Abstract**

The present invention provides a rotor-lock system in a wind turbine generator. The system includes a rotor shaft flange (110) mounted to a hub (170) of the wind turbine generator through a plurality of mounting means (195). The exposed portion of the mounting means (195) is extending through the rotor shaft flange (110) towards a main bearing (140) of the wind turbine generator. The removable rotor-lock plate (180) is mounted onto the exposed portion of the mounting means through one or more mounting holes (181) on the rotor-lock plate (180) before a use of the rotor-lock plate and locked by inserting one or more locking pins (190) in the one or more locking holes (182). For unlocking, the locking pins (190) from the one or more locking holes are removed and the rotor-lock plate is unmounted from the exposed portion of the mounting means through one or more mounting holes on the rotor-lock plate (180) after the use of the rotor-lock plate (180).

## Description

### FIELD OF INVENTION:

The present invention relates to a rotor-lock system and method for a wind turbine generator. Specifically, the present invention provides a cost effective and less complex rotor-lock system and method for the wind turbine generator having a removable rotor-lock plate.

### BACKGROUND OF THE INVENTION:

The following background discussion includes information that may be useful in understanding the present invention. It is not an admission that any of the information provided herein is prior art or relevant to the presently claimed invention, or that any publication expressly or implicitly referenced is prior art.

Installing and maintaining wind turbines is an extremely costly operation. There are various components of a wind turbine, the power generating components of the wind turbine are arranged in or near the nacelle. The components such as drive train, main shaft, generator, main bearing or hub, sometimes require maintenance, repair or replacement. It is therefore necessary to allow maintenance personnel to gain access to these parts in order to allow them to perform the required maintenance, repair or replacement. This will sometimes include gaining access to an interior part of the hub. For safety reasons the rotor must be prevented from performing rotational movements during such maintenance operations. To prevent the rotational movement of the rotor there must be some locking mechanism such as rotor-locks. The rotor-locks are crucial safety mechanisms in wind turbines, preventing accidental rotation of the rotor during maintenance or in emergencies like high winds, ensuring the safety of personnel and equipment.

There are number of locking arrangements which have been previously disclosed to provide a suitable locking of the rotor against rotational movements for example, US11384740B2 discloses a rotor-lock assembly for locking a rotor of a wind turbine includes at least one removable rotor-lock. The removable rotor-lock has a housing comprising an opening and a mounting portion, a pin shaft positioned within the opening, and a locking mechanism. The opening extends from a first end to a second end thereof. The mounting portion is adapted for mounting to a bearing housing adjacent to a rotor-lock plate of the rotor. The rotor-lock plate comprises a housing. The housing may include an opening. The opening may extend from a first end to a second end. The housing may also include a mounting portion. The mounting portion may be adapted for mounting to the bearing housing adjacent to the rotor-lock plate of the rotor. The said locking components mentioned above are complex and has number of components which makes it costly.

There is need of the rotor-locking means which is removable and yet simple and easy to use and cheaper.

### OBJECTIVES OF THE INVENTION:

The primary object of the present invention is to provide a rotor-lock method and system for a wind turbine generator (WTG).

Another object of the present invention is to provide a rotor-lock method and system for a wind turbine generator (WTG) which has a removable rotor-lock plate and is cost effective and less complex.

### SUMMARY OF THE INVENTION:

In an aspect, present invention provides a rotor-lock system in a wind turbine generator. The system includes a rotor shaft flange mounted to a hub of the wind turbine generator through a plurality of mounting means. The exposed portion of the mounting means extends through the rotor shaft flange towards a main bearing of the wind turbine generator. The removable rotor-lock plate mounted onto the exposed portion of the mounting means through one or more mounting holes on the rotor-lock plate before a use of the rotor-lock plate and locked by inserting one or more locking pins in the one or more locking holes. For unlocking, the locking pins from the one or more locking holes are removed and the rotor-lock plate is unmounted from the exposed portion of the mounting means through one or more mounting holes on the rotor-lock plate after the use of the rotor-lock plate.

In an aspect, present invention provides method of using a rotor-lock systemin a wind turbine generator. The method includes the steps of mounting the removable rotor-lock plate onto an exposed portion of one or more mounting means through one or more mounting holes on the rotor-lock plate. Further, locking the removable rotor-lock plate onto the exposed portion of the mounting means by a locking means. Next step is to unlock the removable rotor-lock plate by removing locking pins locking holes and unmounting the removable rotor-lock plate from the exposed portion of the mounting means.

### DETAILED DESCRIPTION OF DRAWINGS:

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of their scope. The invention will be described and explained with additional specificity and detail with the accompanying drawings in which:
Fig. 1: illustrates a rotor-lock system of the present invention with a removable rotor-lock plate;
Fig 2: illustrates a rotor-lock system of the present invention without a removable rotor-lock plate;
Fig. 3: illustrates a rotor-lock plate of the present invention;
Fig. 4: illustrates a removable rotor-lock plate being mounted before use or unmounted after use;
Fig. 5: illustrates a perspective view showing a mounted removable rotor-lock plate ready for use;
Fig. 6: illustrates the rotor-lock plate mounted and locked by locking pins when in use; and
Fig. 7: illustrates a process flow depicting a method of the present invention.

### DETAILED DESCRIPTION:

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof.

The terms "comprises", "comprising", "includes", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

Generally, the wind turbine includes a tower extending from the ground, a nacelle mounted on the tower, and a rotor coupled to the nacelle. The rotor includes a rotatable hub and three rotor blades connected to the rotatable hub. Each rotor blade may be spaced about the rotatable hub to facilitate rotating the rotor to enable kinetic energy to be transferred from the wind into mechanical energy, and subsequently, electrical energy. For instance, the rotatable hub may be rotatably coupled to an electric generator positioned within the nacelle to permit electrical energy to be produced. In general, the generator is coupled to the rotor of the wind turbine for generating electrical power from the rotational energy generated by the rotor. For example, the rotor may include a main shaft coupled to the hub for rotation. The generator may then be coupled to the main shaft such that rotation of the main shaft drives the generator.

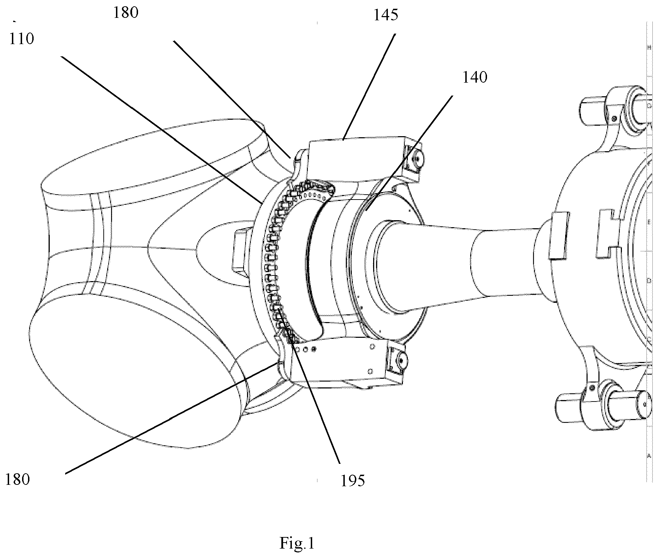

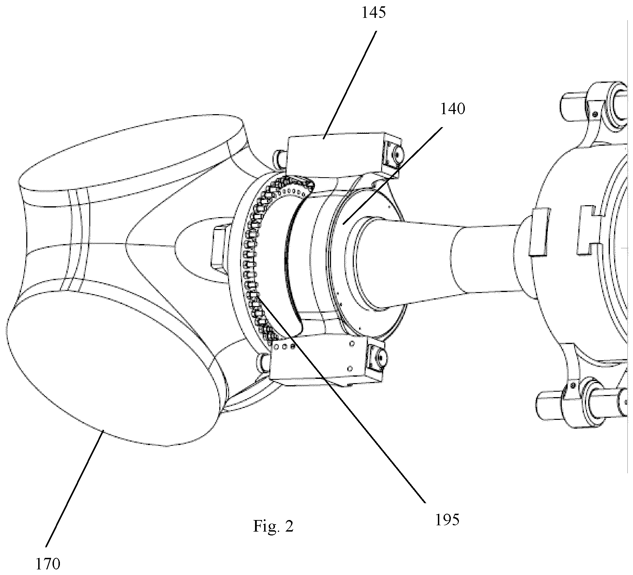

FIGS. 1 & 2 illustrates a rotor-lock system in a wind turbine generator with and without a removable rotor-lock plate respectively.

The rotor-lock system comprises a rotor shaft flange 110 mounted to a hub 170 of the wind turbine generator. The rotor shaft flange 110 in the wind turbine generator serves as a critical interface between the rotor shaft and the generator, ensuring efficient power transmission, structural stability, and secure connection. The rotor shaft flange 110 is usually bolted but sometimes also welded to the hub which ensures a firm, reliable connection, preventing misalignment and mechanical failure.

According to an embodiment, the rotor shaft flange 110 is mounted to the hub 170 by a mounting means 195. The mounting means 195 may be a fastening means 195 such as a nut and bolt or a stud. In this configuration, the head of the stud or bolt is positioned within the hub 170 and the threaded portion of the bolt extends outwards from the hub 170, directing towards the main bearing 140. To ensure a secure and reliable mounting, a nut is fastened onto the threaded portion of the bolt and tightened to the required torque specification, firmly locking the rotor shaft flange 110 in place.

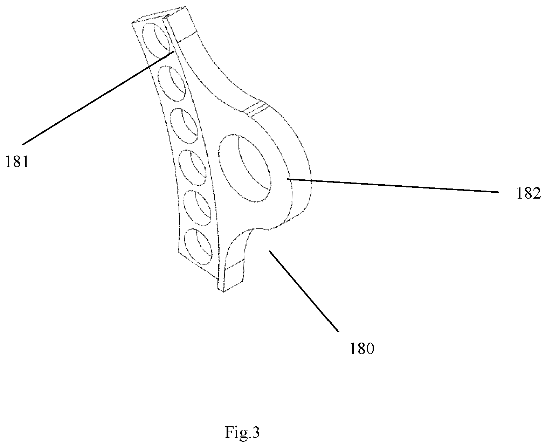

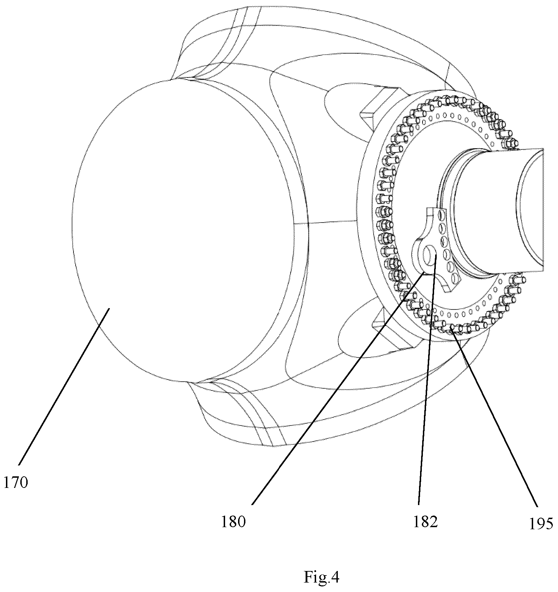

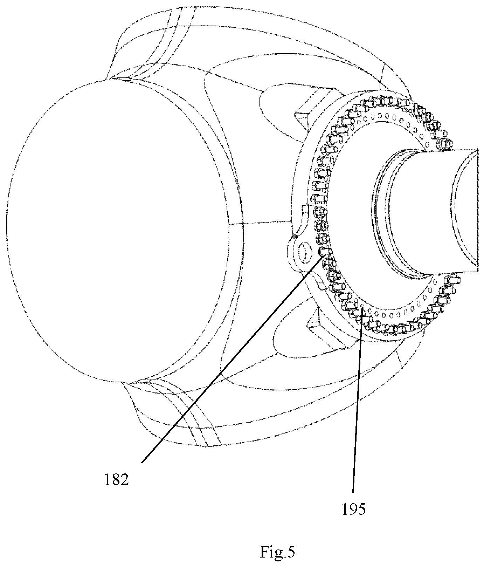

The threaded portion of the bolt or the stud 195 is designed with a sufficient length extending beyond the nut used to fasten the rotor-lock shaft to the hub 170, hereinafter referred to as an exposed threaded portion as shown more clearly in Fig 4 and 5. A removable rotor-lock plate 180, as shown in Fig 3, is adapted to be mounted and fastened onto the exposed threaded portion.

According to an embodiment, as shown in fig 3, the removable rotor-lock plate 180 is an asymmetrical triangle-like structure with a curved, contoured profile. A large locking hole 182 is located near the wider section of the component and multiple mounting holes 181 are arranged in a row are provided on the other section of the rock-lock plate 180. It is to be understood that the rotor-lock plate 180 depicted here is merely a preferred embodiment. A rotor-lock plate 180 with any shape, size and any number and size of mounting holes 181 and locking holes 182 may be used.

As shown in Figs 4, 5 and 6, the removable rotor-lock plate 180, when intended to be used, is manually lifted and mounted onto the exposed threaded portion through the mounting holes 181 and thereafter fastened thereon by means of a nut. Additionally, bushings before the nut may be used for a more secure fastening. It is envisaged that any other means of fastening may be used as long as it is not permanent in nature.

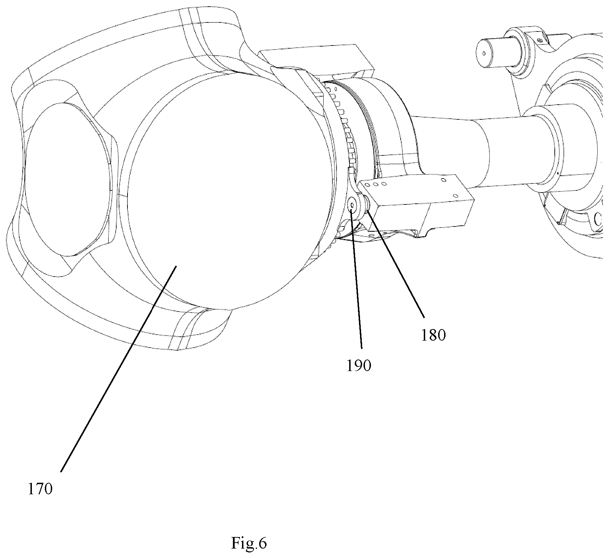

As shown in Fig 6, a locking pin 190 extending from a locking pin housing 145 is inserted into the locking hole 182 of the rotor-lock plate 180 for locking the rotor-lock plate 180. The maintenance person can now safely enter the hub and perform maintenance work.

After the maintenance work is completed and/or when the rotor-lock plate 180 is no longer required, the locking pin 190 is retracted back into the locking pin housing 145. The rotor-lock plate 180 can then be manually unfastened and unmounted from the threaded exposed portion (as shown in Fig 4).

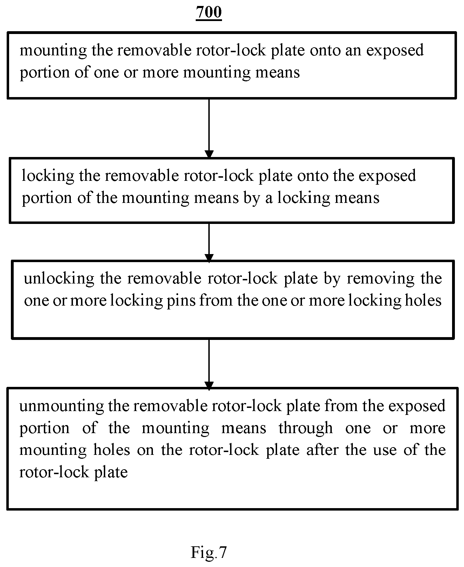

FIG. 7 illustrates a process flow depicting the method of working of the rotor-lock system of the present invention.

According to an embodiment, as shown in fig 3, the removable rotor-lock plate 180 is an asymmetrical triangle-like structure with a curved, contoured profile. A large locking hole 182 is located near the wider section of the component and multiple mounting holes 181 are arranged in a row are provided on the other section of the rock-lock plate 180. It is to be understood that the rotor-lock plate 180 depicted here is merely a preferred embodiment. A rotor-lock plate 180 with any shape, size and any number and size of mounting holes 181 and locking holes 182 may be used.

When the rotor-lock plate 180 is required to be used, as a first step, a removable rotor-lock plate 180 is manually or by means of a crane or other tools lifted and mounted onto an exposed portion of one or more mounting means 195 through one or more mounting holes 181 on the rotor-lock plate 180. The mounting means 195 may be a fastening means 195 such as a nut and bolt or a stud.

In an embodiment, the mounting means 195 is also being used for mounting the rotor shaft flange 110 to a hub 170 of the wind turbine generator. The rotor shaft flange 110 in the wind turbine generator serves as a critical interface between the rotor shaft and the generator, ensuring efficient power transmission, structural stability, and secure connection. The rotor shaft flange 110 is usually bolted but sometimes also welded to the hub 170 which ensures a firm, reliable connection, preventing misalignment and mechanical failure. In this configuration, the head of the stud or bolt is positioned within the hub 170 and the threaded portion of the bolt extends outwards from the hub 170, directing towards the main bearing 140 To ensure a secure and reliable mounting, a nut is fastened onto the threaded portion of the bolt and tightened to the required torque specification, firmly locking the rotor shaft flange 110 in place. The threaded portion of the bolt or the stud is designed with a sufficient length extending beyond the nut used to fasten the rotor-lock shaft to the hub 170, referred to as the exposed threaded portion on which the rotor-lock plate 180 is mounted.

At second step, a locking pin 190 extending from a locking pin housing 145 is inserted into the locking hole 182 of the rotor-lock plate 180 for locking the rotor-lock plate 180. The maintenance person can now safely enter the hub and perform maintenance work.

After the maintenance work is completed and/or when the rotor-lock plate 180 is no longer required, for unlocking the removable rotor-lock plate 180 the locking pin 190 is retracted back into the locking pin housing 145 and the removable rotor-lock plate 180 is manually unfastened and unmounted from the exposed threaded portion of the mounting means 195.

A removable rotor lock 180 plate presents a significant cost and operational advantage over a permanent rotor lock plate or disc in wind turbine generators, particularly in large-scale wind farms. In conventional designs, each wind turbine generator is equipped with a dedicated permanent rotor lock plate, necessitating higher manufacturing, material, and installation costs for every unit. However, with a removable rotor lock plate 180, there is no need to provide a lock plate for each turbine, thereby substantially reducing production costs and simplifying installation requirements. Since not all turbines in a wind farm require rotor locking simultaneously, a limited number of removable rotor lock plates 180 can be maintained at the site and deployed on-demand as needed for maintenance or servicing. This approach optimizes resource utilization and eliminates the need of installing a permanent rotor lock disc in every turbine, which may remain unused for extended periods. While using a removable rotor lock plate 180 does introduce some additional manual effort and installation time during its application, the overall cost savings in terms of reduced manufacturing expenses, lower material usage, and decreased initial installation effort far outweigh these drawbacks, more particularly for a large-scale windfarm. Additionally, this design increases the flexibility and adaptability of wind farm operations by allowing the same locking plates to be used across multiple turbines as required. By minimizing the need for permanent installations while ensuring effective rotor locking, when necessary, the removable rotor lock plate offers a highly efficient, economical, and practical solution for modem large scale wind farms.

Many modifications and other embodiments of the invention set forth herein will readily occur to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

The foregoing description of embodiments of the invention has been presented for purposes of illustration and description. It is not intended to be exhaustive or to limit the invention to the precise form disclosed, and modifications and variations are possible in light of the above teachings or may be acquired from the practice of the invention. The embodiments were chosen and described in order to explain the principles of the invention and its practical application to enable one skilled in the art to utilize the invention in various embodiments and with various modifications as are suited to the particular use contemplated.

## Claims

1. A rotor-lock system in a wind turbine generator, the rotor-lock system comprising:
a) a rotor shaft flange (110) mounted to a hub (170) of the wind turbine generator through a plurality of mounting means wherein an exposed portion of the mounting means extending through the rotor shaft flange (110) towards a main bearing (140) of the wind turbine generator;
b) a removable rotor-lock plate (180) comprising one or more mounting holes (181) and one or more locking holes (182), the removable rotor-lock plate (180) adapted to be:
a. mounted onto the exposed portion of the mounting means through one or more mounting holes (181) on the rotor-lock plate (180) before a use of the rotor-lock plate; and
b. locked by inserting one or more locking pins (190) in the one or more locking holes (182);
c. unlocked by removing the one or more locking pins (190) from the one or more locking holes (182);
d. unmounted from the exposed portion of the mounting means through one or more mounting holes (181) on the rotor-lock plate after the use of the rotor-lock plate.

2. The rotor-lock system in a wind turbine generator as claimed in claim 1, wherein the mounting means is a fastening means (195) such as a nut and bolt or a stud.

3. The rotor-lock system as claimed in claim 1, wherein the exposed portion of the mounting means is threaded, the removable rotor-lock plate (180) adapted to be fastened onto and unfastened from the threaded exposed portion of the mounting means (195).

4. A method for using a rotor-lock system in a wind turbine generator, the method comprising steps of:
a) mounting the removable rotor-lock plate (180) onto an exposed portion of one or more mounting means through one or more mounting holes (181) on the rotor-lock plate (180), the mounting means being used for mounting the rotor shaft flange (110) to a hub of the wind turbine generator, wherein the exposed portion of the mounting means extending through the rotor shaft flange (110) towards a main bearing (140) of the wind turbine generator;
b) locking the removable rotor-lock plate (180) by inserting one or more locking pins (190) in the one or more locking holes (182);
c) unlocking the removable rotor-lock plate (180) by removing the one or more locking pins from the one or more locking holes (182); and
d) unmounting the removable rotor-lock plate (180) from the exposed portion of the mounting means through one or more mounting holes (181) on the rotor-lock plate (180) after the use of the rotor-lock plate (180).

5. The method as claimed in claim 4, wherein the mounting means (195) is a fastening means such as a nut and bolt or a stud.

6. The method as claimed in claim 4, wherein the exposed portion of the mounting means is threaded, the removable rotor-lock plate (180) is fastened onto and unfastened from the threaded exposed portion of the mounting means (195) for holding the rotor-lock plate (180) tightly when in use.
